# EUROPÄISCHE PATENTSCHRIFT

(11) **EP 0 693 639 B1**
(45) Veröffentlichungstag und Bekanntmachung des Hinweises auf die Patenterteilung: **11.03.1998**
(21) Anmeldenummer: 94111347.4
(22) Anmeldetag: 21.07.1994
(51) Int. Cl.: F16G 13/18

(54) **Gliederkette**
Chain
Chaîne

(43) Veröffentlichungstag der Anmeldung: 24.01.1996
(73) Patentinhaber: Linde Aktiengesellschaft, 65189 Wiesbaden (DE)
(72) Erfinder: Frenker-Hackfort, Ludger, D 57548 Herkersdorf (DE)

(56) Entgegenhaltungen:
- DE-B- 1 030 122
- DE-U- 1 799 032
- DE-U- 9 006 153
- GB-A- 2 153 041
- GB-A- 2 194 308
- US-A- 4 810 238
- US-A- 5 042 244

## Beschreibung

Die Erfindung betrifft eine Gliederkette, bestehend aus mittels Kettenbolzen miteinander verbundenen laschenförmigen Kettengliedern, insbesondere alle Arten von Flyerketten, wie sie als Lastketten überwiegend in Gabelstaplern eingesetzt werden, mit beliebiger Kombination und Anzahl der Kettenlaschen pro Kettenglied.

Das Verstellen der Lastgabel eines Gabelstaplers geschieht mittels eines Hydraulikzylinders, der die als Flyerketten ausgeführten Antriebsketten reversierend beaufschlagt. Hierbei sind zwei Antriebsanordnungen üblich, nämlich je eine rechts und links vom Zylinder verlaufende Kette, was aber die Sicht des Fahrers beeinträchtigt. Um dem vorzubeugen und die Sicht des Fahrers zu verbessern, ist es weiterhin bekannt, nur eine Flyerkette in der Mitte im Bereich des Hydraulikzylinders anzuordnen. Dies hat jedoch den Nachteil, daß die beim Heben der Last und beim Fahren des Staplers gespannte Kette hin- und herschwingt und mit ihren gehärteten Laschen den Kolben des Zylinders beschädigt. Auch mit auf den Laschen gemäß einem internen Stand der Technik aufgesetzten Kunststoffclipsen lassen sich diese Beschädigungen nicht vermeiden, weil die Clipse nur aufgeschnappt sind und dadurch leicht verlorengehen.

Aus der deutschen Gebrauchsmusterschrift 17 99 032 ist eine insbesondere zum Aufhängen von Gegengewichten dienende Laschenkette bekannt. Diese besitzt mittig angeordnete metallische Laschen, die mit vorspringenden Nasen in eine am Umfang einer Umlenkrolle liegende Ringnut eingreifen, um damit einerseits die Führung der Kette verbessern und die Breite der Umlenkrolle verringern zu können; andererseits soll mittels der vorspringenden Nasen verhindert werden, daß die Kette unter der Wirkung von Beschleinigungskräften in gefährlicher Weise überschlägt.

Eine weitere Kette ist durch die deutsche Auslegeschrift 10 30 122 als Einfach- oder Doppelkette bekanntgeworden. Bei dieser Laschenkette soll durch eine bestimmte Formgebung von Innenlaschen aus Metall verhindert werden, daß beim Auflaufen der Kettenglieder auf ein Kettenrad die Innenlaschen mit einem Geräusche verursachenden Schlag gegen die Kante des Kettenrades im Zahngrund auflaufen. Die Innenlaschen der Einfachkette sind daher an ihren dem Kettenrad zugewandten Enden mit bestimmten Radien abgerundet, während die Innenlaschen der Doppelkette sich in Laufrichtung erstreckende nasenförmige Ansätze besitzen. Die mittigen Innenlaschen der Doppelkette liegen, um eine Führung dieser Kette zu ermöglichen, auf einer Gummischnur, die sich in einer Nut zwischen Zahnkränzen des Antriebsrades befindet, d.h. die Gummischnur ist kein Bestandteil der Doppelkette, sondern ein Bauteil des die Laschenkette antreibenden Kettenrades.

Bekannt ist aus der britischen Offenlegungsschrift 2 153 041 auch eine Gliederkette, deren Außenlaschen in im Querschnitt U-förmigen Kunststofflaschen angeordnet sind. Diese Kunststofflaschen gewähren zwar einen Beschädigungsschutz bei Kettenbewegungen in Richtung quer zu den Kettenbolzen, jedoch nicht bei einer seitlichen Kettenbewegung in Richtung der Kettenbolzen.

Der Erfindung liegt daher die Aufgabe zugrunde, eine Gliederkette zu schaffen, die einen allseitigen Beschädigungsschutz gewährleistet und insbesondere benachbarte Bauteile gegenüber seitlichen Kettenbewegungen schützt. Diese Aufgabe löst die Erfindung mit einer Gliederkette mit laschenförmigen Kettengliedern aus Metall und Kunststoff, deren Kunststofflaschen mit einem Längsschlitz versehen sind, jeweils eine Außenlasche manschettenförmig umgreifen und mit Öffnungen für die Kettenbolzen einerseits sowie diesen gegenüberliegenden äußeren Ausnehmungen andererseits versehen sind.

Die aus einem schlagzähen Material wie Polyacetal oder Niederdruckpolyäthylen bestehenden Kunststofflaschen bewirken, daß beim unvermeidlichen Schwingen oder Verkanten der Kette nicht die Kettenglieder, sondern die demgegenüber vorspringenden Kunststofflaschen gegen die Bauteile schlagen, die sich in der Nähe der Kette befinden, wie insbesondere Mastteile oder die Kolbenstange des Hydraulikzylinders. Bei den Kunststofflaschen handelt es sich um separate Teile, die als integrierte Bestandteile der Kette zwischen metallischen Kettenlaschen auf den Kettenbolzen befestigt sind. Die erfindungsgemäße Kunststofflasche umschließt stets eine metallische Lasche manschettenartig und verhindert daher Beschädigungen in allen Richtungen. Aufgrund dieser Anordnung der Kunststofflaschen, die vorteilhaft außermittig der Kette zumindest einreihig, alternativ mittig zumindest einreihig in der Kette angeordnet sein können, wird der angestrebte kombinierte Schutz sowohl beim Schwingen als auch beim Verdrehen und Verkanten der Kette erreicht, denn selbst eine sich sehr stark verkantende bzw. verdrehende Kette trifft immer noch mit einer Kunststofflasche auf das vor Beschädigungen zu schützende benachbarte Bauteil.

Derartige Kunststofflaschen bieten gleichzeitig auch einen Schutz bei seitlichen Kettenbewegungen in Richtung der Bolzenachsen.

Die Ausnehmungen können dabei so angeordnet sein, daß die Außenseiten der Kunststofflaschen doppel-T-förmig konturiert sind.

Die Erfindung wird nachfolgend anhand von in der Zeichnung dargestellten Ausführungsbeispielen des näheren erläutert. In der Zeichnung zeigen:
- Fig. 1: die Seitenansicht einer Gliederkette mit den erfindungsgemäßen Kunststofflaschen,
- Fig. 2: einen vertikalen Querschnitt durch die Kette der Fig. 1 nach der Linie II-II und
- Fig. 3: einen gleichartigen Schnitt durch eine Gliederkette mit zwei Reihen von Kunststofflaschen.

Die Gliederkette besteht aus Außenlaschen 1, 2 und mehreren jeweils paarweise angeordneten Innenlaschen 3 sowie Innenlaschen 4, zwischen denen und den Außenlaschen 1 eine Kunststofflasche 5 eingespannt ist. Sämtliche Laschen 1 bis 5 sind über Kettenbolzen 6 miteinander verbunden.

Die Kunststofflaschen 5 überragen die metallischen Laschen 2, 3, 4 quer zu den Längsachsen der Bolzen 6 nach beiden Seiten und besitzen einen Längsschlitz 8, durch den sich die Außenlasche 1 erstreckt.

Des weiteren besitzen die Kunststofflaschen 5 im einzelnen nicht dargestellte Öffnungen, durch die sich die Kettenbolzen 6 erstrecken. Diesen Öffnungen liegen äußeren Ausnehmungen 7 gegenüber, die eine doppel-T-förmige Kontur der Außenseite der Kunststoff laschen ergeben und jeweils einen Freiraum zum Einsetzen der Kettenbolzen 6 schaffen.

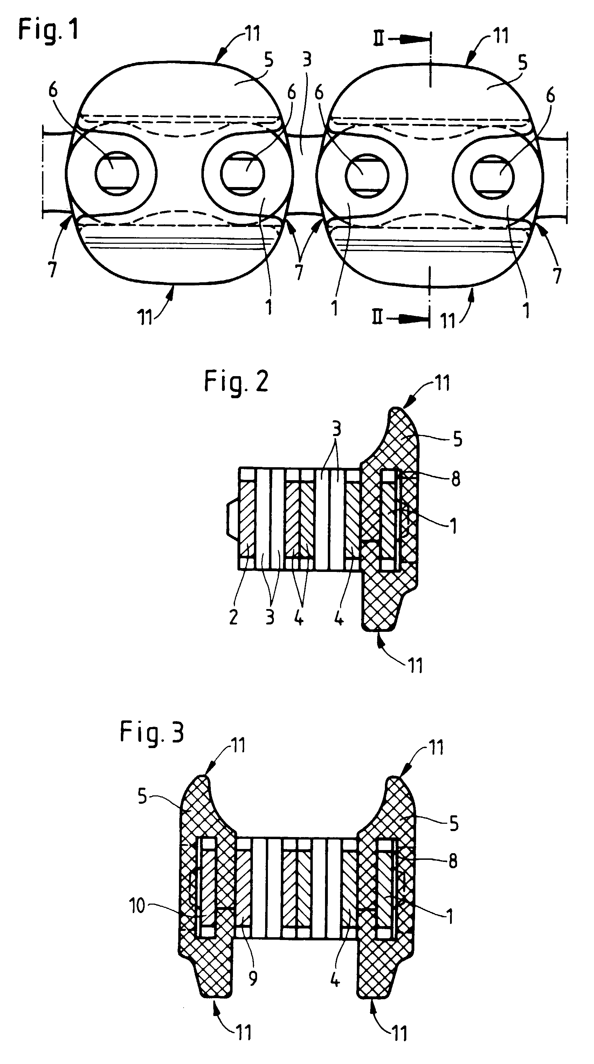

Die Gliederkette kann entsprechend der Darstellung in Fig. 3 mit einer weiteren Reihe von Kunststofflaschen 5 versehen sein, die jeweils zwischen einer Innenlasche 9 und einer Außenlasche 10 eingespannt sind.

Die vorstehenden Teile der Kunststofflaschen 5 wirken als Stoßkanten 11 und schützen andere Bauteile bei Kettenbewegungen quer zu den Bolzenlängsachsen, während bei Kettenbewegungen in Richtung der Bolzenachsen durch den nach außen vor den Außenlaschen 1, 10 liegenden doppel-T-förmigen Teil der Kunststofflaschen 5 ein wirksamer Schutz gegeben ist.

## Patentansprüche

1. Gliederkette, insbesondere Flyerkette, aus mittels Kettenbolzen miteinander verbundenen laschenförmigen Kettengliedern, bei der Laschen aus Kunststoff zum Schutze benachbarter Bauteile vor Beschädigungen zwischen Laschen der Kettenglieder angeordnet sind und mindestens eine quer zur Längsachse der Kettenbolzen gegenüber den Kettengliedern vorspringende freie Stoßkante besitzen, gekennzeichnet durch mit einem Längsschiltz (8) versehene, jeweils eine Außenlasche (1, 10) manschettenförmig umgreifende Kunststofflaschen (5) mit Öffnungen für die Kettenbolzen (6) und diesen gegenüberliegenden äußeren Ausnehmungen (7).

2. Kette nach Anspruch 1, gekennzeichnet durch eine Reihe außermittig angeordneter Kunststofflaschen (5).

3. Kette nach Anspruch 1 oder 2, dadurch gekennzeichnet, daß die Außenseite der Kunststofflaschen (5) doppel-T-förmig konturiert sind.

## Claims

1. Chain, in particular a flyer chain, made of plate-like chain links connected to one another by means of link pins, in which link plates made of plastic are arranged between link plates of the chain links, in order to protect adjacent components against damage, and have at least one free impact edge projecting beyond the chain links, transversely to the longitudinal axis of the link pins, characterized by plastic link plates (5) that are provided with a longitudinal slot (8), in each case grip like a collar around an outer link plate (1, 10) and have openings for the link pins (6) and outer cut-outs (7) located opposite the latter.

2. Chain according to Claim 1, characterized by a series of plastic link plates (5) arranged off-centre.

3. Chain according to Claim 1 or 2, characterized in that the outer sides of the plastic link plates (5) are contoured in a double-T shape.

## Revendications

1. Chaîne à maillons, en particulier chaîne flyer faite de maillons de chaîne en forme d'étriers reliés entre eux par des axes de chaîne, dans laquelle des étriers en matière plastique sont disposés entre des étriers des maillons de chaîne afin de protéger des éléments de structure voisins contre les dommages endommagements et possèdent au moins un bord d'impact libre transversal à l'axe longitudinal des axes de chaîne et faisant saillie par rapport aux maillons de chaîne, caractérisée par des étriers (5) en matière plastique pourvus d'une fente longitudinale (8), enserrant chacune un étrier extérieur (1, 10) comme une manchette, comprenant des ouvertures pour les axes de chaîne (6) et des échancrures extérieures (7) en face de ces axes.

2. Chaîne suivant la revendication 1, caractérisée par une rangée d'étriers (5) en matière plastique disposés de manière excentrée.

3. Chaîne suivant la revendication 1 ou 2, caractérisée en ce que les faces extérieures des étriers (5) en matière plastique présentent un contour en forme de double T.
